# EUROPÄISCHE PATENTSCHRIFT

(11) **EP 1 884 680 B1**
(45) Veröffentlichungstag und Bekanntmachung des Hinweises auf die Patenterteilung: **04.03.2009**
(21) Anmeldenummer: 07111676.8
(22) Anmeldetag: 03.07.2007
(51) Int. Cl.: F16D 65/14, F16D 65/00

(54) **Selbstverstärkende elektromechanische Reibungsbremse**
Self-energising electromechanical friction brake
Frein à friction électromécanique à auto-amplification

(30) Priorität: 02.08.2006 DE 102006035985
(43) Veröffentlichungstag der Anmeldung: 06.02.2008
(73) Patentinhaber: ROBERT BOSCH GMBH, 70442 Stuttgart (DE)
(72) Erfinder: Cao, Chi-Thuan, 70825 Korntal-Muenchingen (DE); Hofmann, Dirk, 70439 Stuttgart (DE); Vollert, Herbert, 71665 Vaihingen/Enz (DE); Nagel, Willi, 71686 Remseck/Hochdorf (DE); Foitzik, Bertram, 74360 Ilsfeld (DE); Goetzelmann, Bernd, 71063 Sindelfingen (DE)

(56) Entgegenhaltungen:
- DE-A1- 10 336 284
- DE-B- 1 143 403
- US-A- 3 800 920

## Beschreibung

### Stand der Technik

Die Erfindung betrifft eine selbstverstärkende elektromechanische Reibungsbremse mit den Merkmalen des Oberbegriffs des Anspruchs 1, die insbesondere zur Verwendung als Radbremse in Kraftfahrzeugen vorgesehen ist.

Eine derartige Reibungsbremse in Bauform einer Scheibenbremse ist bekannt aus der DE 101 51 950 A1 oder der DE 103 36 284. Die bekannte Scheibenbremse weist einen im Querschnitt U-förmigen Faustsattel als Bremssattel auf, der eine Bremsscheibe am Umfang übergreift und in dem beiderseits einer Bremsscheibe zwei Reibbremsbeläge einliegen. Der Bremssattel ist quer zur Bremsscheibe verschieblich gelagert, es handelt sich also um einen sog. Schwimmsattel. Die Verwendung eines Festsattels ist allerdings ebenfalls möglich. Die Bremsscheibe kann allgemein auch als Bremskörper aufgefasst werden. Die Erfindung ist nicht auf eine Scheibenbremse beschränkt, es sind auch andere Bremsenbauformen möglich. Im Falle einer Scheibenbremse ist der Bremskörper eine Bremsscheibe, im Falle beispielsweise einer Trommelbremse ist der Bremskörper eine Bremstrommel.

Zur Betätigung weist die bekannte Scheibenbremse eine elektromechanische Betätigungseinrichtung auf, mit der ein Reibbremsbelag an eine Seite der Bremsscheibe drückbar ist. Durch das Andrücken des einen Reibbremsbelags an die eine Seite der Bremsscheibe wird der Bremssattel quer zur Bremsscheibe verschoben und drückt den anderen Reibbremsbelag an die andere Seite der Bremsscheibe, wodurch die Bremsscheibe gebremst wird. Die elektromechanische Betätigungseinrichtung weist einen Elektromotor, ggf. ein Untersetzungsgetriebe und ein Rotations/Translations-Umsetzungsgetriebe auf. Es sind die verschiedensten Arten von Getrieben verwendbar, außer Gewindetrieben kommt beispielsweise auch ein verdrehbarer Nocken als Rotations/Translations-Umsetzungsgetriebe in Betracht. Anstelle eines Elektromotors kann beispielsweise ein Elektromagnet Verwendung finden. Das Adjektiv elektromechanisch in der Gattungsbezeichnung bezieht sich also auf die Art der Betätigung der Scheibenbremse.

Als Selbstverstärkungseinrichtung weist die bekannte Scheibenbremse einen Keilmechanismus mit einem auf einer der Bremsscheibe abgewandten Rückseite des einen Reibbremsbelags angeordneten Keil auf, der sich an einer Schrägfläche im Bremssattel abstützt. Die Schrägfläche verläuft schräg zur Bremsscheibe, es besteht ein Keilspalt zwischen der Schrägfläche und der Bremsscheibe, der in einer Umfangsrichtung der Bremsscheibe, und zwar in deren vorgesehener Drehrichtung, enger wird. Wird der Reibbremsbelag zur Betätigung der Scheibenbremse an die drehende Bremsscheibe gedrückt, übt die drehende Bremsscheibe eine Reibungskraft in Umfangsrichtung und somit in Richtung des enger werdenden Keilspalts zwischen der Schrägfläche und der Bremsscheibe auf den Reibbremsbelag aus. Aufgrund des Keilprinzips übt die Schrägfläche eine Kraft auf den Reibbremsbelag aus, die eine Kraftkomponente quer zur Bremsscheibe umfasst. Diese Kraftkomponente quer zur Bremsscheibe ist eine Andruckkraft, die den Reibbremsbelag zusätzlich zu einer von der Betätigungseinrichtung aufgebrachten Andruckkraft an die Bremsscheibe drückt. Die von der Betätigungseinrichtung aufgebrachte Andruckkraft wird auf diese Weise vergrößert, es findet eine Selbstverstärkung statt. Der Keilmechanismus wandelt eine von der drehenden Bremsscheibe auf den an sie gedrückten Reibbremsbelag ausgeübte Reibungskraft in eine Andruckkraft des Reibbremsbelags an die Bremsscheibe um. Der Keil bzw. die Schrägfläche müssen keinen konstanten Keilwinkel über ihre gesamte Länge aufweisen, der Keilwinkel kann sich in Abhängigkeit von einem Verschiebeweg des Reibbremsbelags entlang der Schrägfläche ändern. In diesem Fall kann von einem Rampenmechanismus gesprochen werden. Vorzugsweise wird zu Beginn einer Zuspannung der Scheibenbremse ein großer Keiloder Rampenwinkel gewählt, um ein Lüftspiel zwischen den Reibbremsbelägen und der Bremsscheibe schnell zu überwinden. Am Ende der Zuspannung bei großer Brems- und Andruckkraft wird vorzugsweise ein kleiner Keil- oder Rampenwinkel und eine infolgedessen hohe Selbstverstärkung gewählt.

Um eine Selbstverstärkung auch bei umgekehrter Drehrichtung der Bremsscheibe (Rückwärtsfahrt) zu erreichen ist es bekannt, einen zweiten Keilmechanismus mit entgegengesetzt angeordnetem Keil und entgegensetzt schräg verlaufender Schrägfläche bekannt. Der Keilwinkel für Vor- und Rückwärtsfahrt kann zur Erzielung verschieden großer Selbstverstärkungen verschieden sein.

Es ist nicht zwingend, dass der Reibbremsbelag in Umfangsrichtung des Bremskörpers beweglich geführt ist, er kann beispielsweise auch in einer Tangentenoder Sehnenrichtung beweglich sein. Wesentlich ist, dass die Bewegungsrichtung des Reibbremsbelags eine Komponente in Umfangsrichtung der Bremsscheibe aufweist. Anders ausgedrückt muss die Bewegungsrichtung des Reibbremsbelags so gewählt sein, dass die beim Bremsen vom drehenden Bremskörper in Umfangsrichtung des Bremskörpers auf den gegen den Bremskörper gedrückten Reibbremsbelag ausgeübte Reibungskraft eine Komponente in der Verschiebungsrichtung des Reibbremsbelags aufweist, die über die Abstützung des Reibbremsbelags mit dem Rampenmechanismus in eine Andruckkraft des Reibbremsbelags gewandelt wird. Auch das soll unter einer in Umfangsrichtung des Bremskörpers beweglichen Führung des Reibbremsbelags im Sinne der Erfindung verstanden werden, auch wenn es sich streng genommen nicht um eine Bewegung (exakt) in Umfangsrichtung handelt, sondern um eine Bewegung, die eine Komponente in Umfangsrichtung aufweist.

Es ist bekannt, den Reibbremsbelag mit Wälzkörpern, beispielsweise Kugeln, Nadeln oder Rollen, wobei die Rollen zylindrisch oder kegelig sein können, auf den Rampen wälzzulagern.

Es weiter bekannt (z.B. aus der DE 103 36 284), den Keilmechanismus mit Faltenbälgen vor Verschmutzung zu schützen.

### Offenbarung der Erfindung

Die erfindungsgemäße Reibungsbremse mit den Merkmalen des Anspruchs 1 weist Schmutzabdeckungen für die Wälzkörper auf, die die Wälzkörper abdecken und eine Öffnung an den Wälzstellen der Wälzkörper auf den Rampen aufweisen. Es kann jeder Wälzkörper eine eigene Abdeckung aufweisen, es kann auch eine Abdeckung für alle oder mehrere Wälzkörper vorhanden sein. Es ist möglich, die Schmutzabdeckungen so auszubilden, dass nur die Öffnungen an den Wälzstellen vorhanden sind. Durch die Erfindung lässt sich ein Eindringen von Schmutz zur Betätigungseinrichtung der Bremse, beispielsweise deren Getriebe, weitgehend vermeiden. Ein schmutzbedingt erhöhter Verschleiß und eine schmutzbedingt erhöhte Betätigungskraft werden vermieden.

Die Unteransprüche haben vorteilhafte Ausgestaltungen und Weiterbildungen der im Anspruch 1 angegebenen Erfindung zum Gegenstand.

Eine Weiterbildung der Erfindung gemäß Anspruch 2 sieht Schmutzabstreifer oder Dichtungen an die Öffnungen umschließenden Rändern der Schmutzabdeckungen vor. Schmutzabstreifer können beispielsweise Bürstenstreifen sein. Die Schmutzabstreifer oder Dichtungen können die Rampen berühren, wodurch das Eindringen von Schmutz weitgehend verhindert wird. Diese Ausgestaltung der Erfindung hat zudem den Vorteil, dass auch die Wälzstellen der Wälzkörper auf den Rampen schmutzgeschützt sind.

Eine Weiterbildung gemäß Anspruch 3 sieht vor, dass die Schmutzabstreifer oder Dichtungen von einer Außenseite der Schmutzabdeckungen kommenden Schmutz abweisen und etwaigen bereits eingedrungenen Schmutz von innen nach außen durchlassen. Diese Richtungswirkung der Schmutzabstreifer von innen nach außen ist möglich beispielsweise durch eine Schrägstellung von Borsten oder eine Schrägstellung von Dichtlippen. Die Schmutzabstreifer oder Dichtungen wirken wie "Rückschlagventile" für Schmutz.

Die Erfindung ist insbesondere für eine Reibungsbremse in Bauform einer Scheibenbremse vorgesehen (Anspruch 4).

In einer Ausgestaltung der Erfindung gemäß Anspruch 5 sind die Rampen nach Art von Rippen ausgebildet. Die Rippen verlaufen in der Bewegungsrichtung des Reibbremsbelags, also in Umfangsrichtung zum Bremskörper. Bei einer Scheibenbremse, bei der der Bremskörper eine Bremsscheibe ist, verlaufen die Rippen also bogenförmig mit konstantem Radius um eine Drehachse der Bremsscheibe. Ist der Reibbremsbelag beispielsweise in tangentialer oder Sehnenrichtung des Bremskörpers verschiebbar, verlaufen die die Rampen bildenden Rippen gerade. Ein Kamm der die Rampen bildenden Rippen ist als Lauffläche für die Wälzkörper ausgebildet, er weist eine Steigung zum Bremskörper auf, verläuft also in einem Winkel zum Bremskörper. Dabei kann sich die Steigung bzw. der Winkel zum Bremskörper im Verlauf der Rampen ändern, um die Höhe der Selbstverstärkung zu ändern. Die Höhe der die Rampen bildenden Rippen ändert sich also über deren Länge.

### Kurze Beschreibung der Zeichnungen

Die Erfindung wird nachfolgend anhand einer in der Zeichnung dargestellten Ausführungsform näher erläutert. Es zeigen
- Figur 1: eine erfindungsgemäße Reibungsbremse mit Blickrichtung radial von außen in Bezug auf eine Bremsscheibe in einer in eine gedachte Ebene abgewickelten Darstellung;
- Figur 2: eine vergrößerte Ansicht einer Schmutzabdeckkappe einer Rolle der Reibungsbremse aus Figur 1; und
- Figur 3: eine Schnittdarstellung eines Wälzkörpers entlang Linie II - II in Figur 2.

### Beschreibung des Ausführungsbeispiels

Die in der Zeichnung dargestellte erfindungsgemäße Reibungsbremse 1 ist als Schreibenbremse ausgeführt. Sie weist einen als Rahmensattel ausgebildeten Bremssattel 2 mit zwei zueinander parallelen Sattelplatten 3 auf, die durch Anker 4 an ihren Enden miteinander verbunden sind. Die Sattelplatten 3 sind parallel zu einer Bremsscheibe 5 angeordnet, die sich zwischen ihnen befindet. Die Anker 4 erstrecken sich außerhalb eines Umfangs der Bremsscheibe 5. Im Bremssattel 2 ist an einer der Bremsscheibe 5 zugewandten Innenseite einer Sattelplatte 3 ein Reibbremsbelag 6 fest angeordnet. Dieser Reibbremsbelag 6 wird nachfolgend auch als fester Reibbremsbelag 6 bezeichnet werden. Auf der gegenüberliegenden Seite der Bremsscheibe 5 ist ein beweglicher Reibbremsbelag 7 im Bremssattel 2 angeordnet.

Der Bremssattel 2 ist mit symbolisch dargestellten Schiebeführungen 8 quer zur Bremsscheibe 5 verschieblich geführt, er ist ein sog. Schwimmsattel. Zum Bremsen wird in noch zu erläuternder Weise der bewegliche Reibbremsbelag 7 gegen die eine Seite der Bremsscheibe 5 gedrückt. Eine Reaktionskraft verschiebt den Bremssattel 2 quer zur Bremsscheibe 5, so dass auch der feste Reibbremsbelag 6 gegen die gegenüberliegende Seite der Bremsscheibe 5 gedrückt und diese gebremst wird. Dies ist an sich bekannt und bedarf keiner weiteren Erläuterung.

Auf einer der Bremsscheibe 5 zugewandten Innenseite weist die Sattelplatte 3 auf der Seite des beweglichen Reibbremsbelags 7 drei Rampen 10 auf. Die Rampen 10 sind Abschnitte von Kammlinien von Rippen 11, die sich in Umfangsrichtung der Bremsscheibe 5 erstrecken. Genau genommen handelt es sich bei den Kammlinien um Flächen, deren Breite der Breite der Rippen 11 entspricht. Zwei der Rampen 10 sind an einer Rippe 11 ausgebildet, die dritte Rampe 10 ist an einer bezüglich der Bremsscheibe 5 radial weiter innen angeordneten Rippe 11 ausgebildet, die von der die beiden Rampen 10 aufweisenden, radial weiter außen angeordneten Rippe 11 weitgehend verdeckt ist. Die beiden radial äußeren Rampen 10 sind bezüglich der Bremsscheibe 5 in Umfangsrichtung versetzt angeordnet, die dritte, radial innere Rampe 10 befindet sich in Umfangsrichtung betrachtet zwischen den beiden radial äußeren Rampen 10.

Die Rampen 10 weisen eine Steigung bezüglich der Bremsscheibe 5 auf, d. h. sie verlaufen in einem Winkel zur Bremsscheibe 5. Die Steigung der Rampen 10 kann sich in Umfangsrichtung ändern. Alle Rampen 10 haben dieselbe Steigung, d. h. die radial innere Rampe 10 verläuft in einem größeren Winkel zur Bremsscheibe 5.

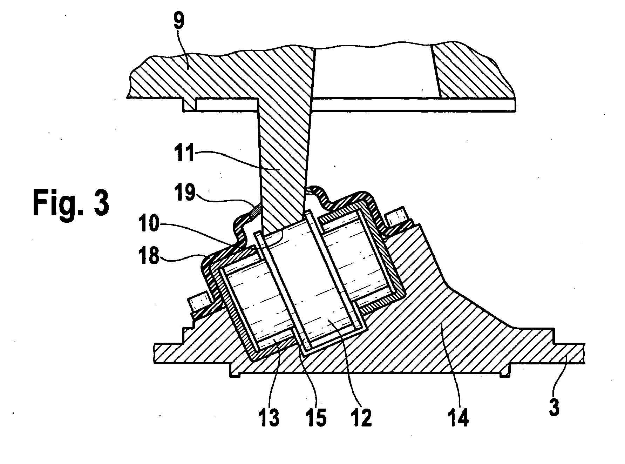

Auf einer der Bremsscheibe 5 abgewandten Rückseite weist der bewegliche Reibbremsbelag 7 eine steife Belagträgerplatte 9 auf. Auf ihrer der Bremsscheibe 5 abgewandten Rückseite weist die Belagträgerplatte 9 Lagersockel 14 auf, in denen Rollen 12 mit Nadellagern 13 (Figur 3) drehbar gelagert sind. Die Rollen 12 wälzen auf den Rampen 10 auf der Innenseite der Sattelplatte 3. Die Rollen 12 können allgemein auch als Wälzkörper bezeichnet werden. Die beiden auf den radial äußeren Rampen 10 wälzenden Rollen 12 weisen Spurkränze 15 auf, die die Rippe 11 seitlich übergreifen und den beweglichen Reibbremsbelag 7 dadurch in Umfangsrichtung der Bremsscheibe 5 führen. Der bewegliche Reibbremsbelag 7 ist über die Rampen 10 mit den drei Rollen 12 an Ecken eines gedachten Dreiecks an der Sattelplatte 3 des Bremssattels 2 abgestützt. Die Abstützung des Reibbremsbelags 7 ist damit eine statisch bestimmte Dreipunktabstützung. Die Anzahl von drei Wälzkörpern 12, die auf drei Rampen 10 wälzen, und deren Anordnung ist nicht zwingend für die Verwirklichung der Erfindung.

Die Rampen 10 und die Rollen 12 bilden einen Rampenmechanismus 10, 12, der den beweglichen Reibbremsbelag 7 in Umfangsrichtung der Bremsscheibe 5 und mit der Steigung der Rampen 10 beweglich führt. Der Reibbremsbelag 7 ist dadurch auf einer schraubenlinienförmigen Bahn beweglich geführt, deren Achse die Drehachse der Bremsscheibe 5 ist.

Zur Betätigung der Scheibenbremse 1 wird der bewegliche Reibbremsbelag 7 in Längsrichtung der Rampen 10 verschoben, so dass er auf der gedachten schraubenlinienförmigen Bahn in Anlage an die Bremsscheibe 5 gelangt und gegen diese gedrückt wird. Dadurch wird die Bremsscheibe 5 in oben beschriebener Weise gebremst. Die drehende Bremsscheibe 5 übt eine Reibungskraft auf den gegen sie gedrückten beweglichen Reibbremsbelag 7 aus, die diesen in seiner Verschieberichtung beaufschlagt. Die Abstützung des Reibbremsbelags 7 über die Rampen 10 an den Rollen 12 verursacht auf Grund der Steigung der Rampen 10 eine Kraft mit einer Komponente senkrecht zur Bremsscheibe 5. Diese Kraft bildet eine Andruckkraft, die den Reibbremsbelag 7 gegen die Bremsscheibe 5 drückt. Diese von der Reibungskraft zwischen der drehenden Bremsscheibe 5 und dem gegen sie gedrückten Reibbremsbelag 7 verursachte Andruckkraft ist eine Andruckkraft zusätzlich zu einer noch zu beschreibenden, von einer Betätigungseinrichtung der Scheibenbremse 1 ausgeübten Andruckkraft. Die zusätzliche Andruckkraft erhöht die Bremskraft der Scheibenbremse 1. Der Rampenmechanismus 10, 12 bildet eine Selbstverstärkungseinrichtung der Scheibenbremse 1, die eine Reibungskraft zwischen der drehenden Bremsscheibe 5 und dem gegen sie gedrückten beweglichen Reibbremsbelag 7 in eine Andruckkraft wandelt und die Bremskraft der Scheibenbremse 1 erhöht.

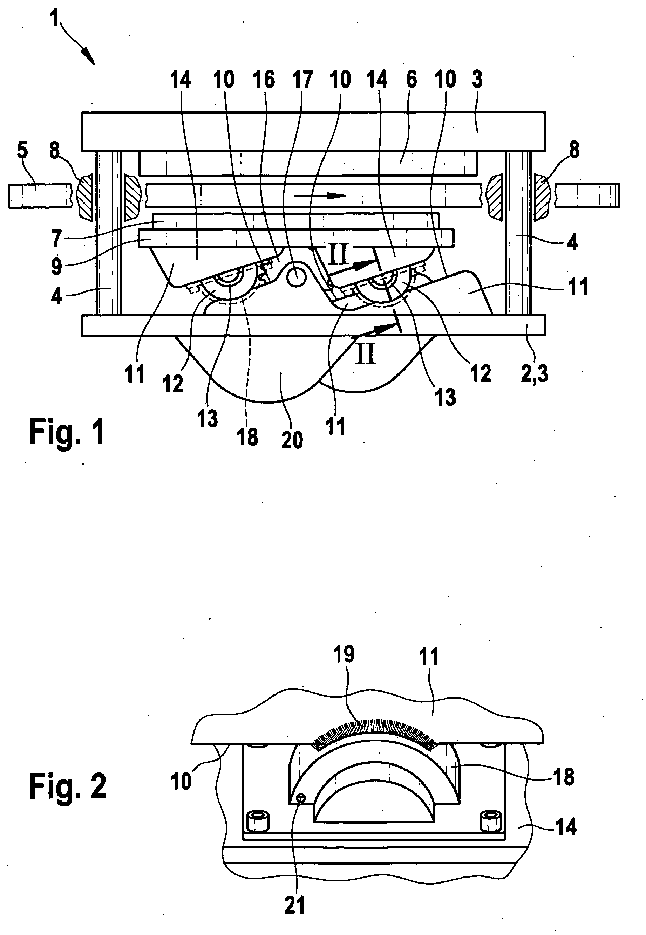

Wie in Figur 3 zu sehen, weisen die Rollen 12 eine Querneigung auf, wobei die Querneigungen der radial inneren Rolle 12 und der radial äußeren Rollen 12 einander entgegengesetzt sind. In Figur 1 ist der einfacheren Darstellung wegen keine Querneigung der Rollen 12 gezeigt.

Die Scheibenbremse 1 weist eine elektromechanische Betätigungseinrichtung auf, deren Teile weitgehend in einem Gehäuse 20 der Sattelplatte 3 des Bremssattels 2 untergebracht und deswegen in der Zeichnung nicht sichtbar sind. Die Betätigungseinrichtung weist einen Elektromotor auf, dessen Ritzel ein großes Zahnrad 16 antreibt. Das Zahnrad 16 ist starr auf einer Welle 17 angebracht, die in den Rippen 11 drehbar gelagert ist. Die Welle 17 trägt ein Ritzel, das von der radial äußeren Rippe 11 verdeckt und deswegen nicht sichtbar ist. Das Ritzel der Welle 17 kämmt mit einer Zahnstange, die zwischen den Rippen 11 auf der Rückseite der Belagträgerplatte 9 angeordnet ist. Die Zahnstange, die ebenfalls von der radial äußeren Rippe 11 verdeckt ist, weist die gleiche Steigung wie die Rampen 10 auf. Durch drehenden Antrieb der Welle 17 mit dem nicht sichtbaren Elektromotor der Betätigungseinrichtung verschiebt das Ritzel der Welle 17 den beweglichen Reibbremsbelag 7 an dessen Zahnstange auf der beschriebenen schraubenlinienförmigen Bahn zur Bremsscheibe 5.

Die Rollen 12, die die Wälzkörper des Rampenmechanismus 10, 12 der erfindungsgemäßen Scheibenbremse 1 bilden, weisen Schmutzabdeckungen auf. Dabei handelt es sich um Schmutzabdeckkappen 18, die die Rollen 12 abdecken, soweit diese aus den Lagersockeln 14 vorstehen. In Figur 1 sind die Schmutzabdeckkappen 18 mit Strichlinien angedeutet, damit die Rollen 12 sichtbar sind. Die Schmutzabdeckkappen 18 sind an den Lagerböcken 14 angeschraubt. Sie weisen eine Öffnung an den Wälzstellen der Rollen 12 auf den Rampen 10 auf. Am Rand der Öffnungen weisen die Schmutzabdeckkappen 18 Bürstenstreifen als Schmutzabstreifer 19 auf. Die die Schmutzabstreifer 19 bildenden Bürsten liegen an Seitenflächen und an den Rampen 10 der Rippen 11 an. Die Bürsten sind schräg nach außen gerichtet, sie weisen Schmutz, der von außen kommt, ab und lassen etwaigen eingedrungenen Schmutz von innen nach außen durchtreten. Die die Schmutzabstreifer 19 bildenden Bürstenstreifen vermeiden, dass Schmutz an die Wälzstellen der Rollen 12 auf den Rampen 10 und in das Gehäuse 20 eindringt, in dem sich die elektromechanische Betätigungseinrichtung der Scheibenbremse 1 befindet. Erhöhter Verschleiß und Schwergängigkeit durch Schmutz wird dadurch vermieden.

Der Rand der Öffnung der Schmutzabdeckungen 18 und die Schmutzabstreifer 19 weisen eine Sattelform auf, d. h. ihre Längsränder an den Seiten der Rippen 11 verlaufen bogenförmig.

An ihrer in einer Einbaulage des Bremssattels 2 tiefsten Stelle weist die Schmutzabdeckkappe eine Ablauföffnung 21 für eingedrungene Flüssigkeit auf. Zum Korrosionsschutz bestehen die Rippen 11 und die Rollen 12 aus rostfreiem Stahl und die Schmutzabdeckkappen 18 aus Aluminium oder Kunststoff.

## Patentansprüche

1. Selbstverstärkende Reibungsbremse, mit einem Reibbremsbelag (7), mit einer Betätigungseinrichtung, mit der der Reibbremsbelag (7) zum Bremsen gegen einen drehbaren und zu bremsenden Bremskörper (5) drückbar ist, und mit einer Seilbstverstärkungseinrichtung, die eine beim Bremsen vom drehenden Bremskörper (5) auf den gegen ihn gedrückten Reibbremsbelag (7) ausgeübte Reibungskraft in eine Andruckkraft wandelt, die den Reibbremsbelag (7) zusätzlich zu einer von der Betätigungseinrichtung bewirkten Andruckkraft gegen den Bremskörper (5) drückt, wobei die Selbstverstärkungseinrichtung einen Rampenmechanismus mit auf Rampen (10) wälzenden Wälzkörpern (12) aufweist, über den sich der Reibbremsbelag (7) beim Bremsen abstützt und der den Reibbremsbelag (7) mit einer Steigung und in einer Umfangsrichtung zum Bremskörper (5) beweglich führt, **dadurch gekennzeichnet, dass** die Wälzkörper (12) Schmutzabdeckungen (18) aufweisen, die die Wälzkörper (12) abdecken und eine Öffnung an Wälzstellen der Wälzkörper (12) auf den Rampen (10) aufweisen.

2. Selbstverstärkende Reibungsbremse nach Anspruch 1, **dadurch gekennzeichnet, dass** die Schmutzabdeckungen (18) Schmutzabstreifer (19) oder Dichtungen an ihren die Öffnungen umschließenden Rändern aufweisen.

3. Selbstverstärkende Reibungsbremse nach Anspruch 2, **dadurch gekennzeichnet, dass** die Schmutzabstreifer (19) oder Dichtungen Schmutz von außen abweisen und Schmutz von innen nach außen durchlassen.

4. Selbstversfärkende Reibungsbremse nach Anspruch 1, **dadurch gekennzeichnet, dass** die Reibungsbremse (1) eine Scheibenbremse ist.

5. Selbstverstärkende Reibungsbremse nach Anspruch 1, **dadurch gekennzeichnet, dass** die Rampen (10) nach Art von Rippen ausgebildet sind.

## Claims

1. Self-boosting friction brake, having a friction brake lining (7), having an actuating device by means of which the friction brake lining (7) can, for braking, be pressed against a rotatable brake body (5) which is to be braked, and having a self-boosting device which converts a friction force, which is exerted by the rotating brake body (5) on the friction brake lining (7) which is pressed against said rotating brake body (5) during braking, into a pressure force which presses the friction brake lining (7) against the brake body (5) in addition to a pressure force generated by the actuating device, with the self-boosting device having a ramp mechanism with rolling bodies (12) which roll on ramps (10), by means of which ramp mechanism the friction brake lining (7) is supported during braking and which ramp mechanism guides the friction brake lining (7) in a movable fashion with a gradient and in a tangential direction with respect to the brake body (5), **characterized in that** the rolling bodies (12) have dirt covers (18) which cover the rolling bodies (12) and which have an opening at rolling points of the rolling bodies (12) on the ramps (10).

2. Self-boosting friction brake according to Claim 1, **characterized in that** the dirt covers (18) have dirt scrapers (19) or seals at their edges which surround the openings.

3. Self-boosting friction brake according to Claim 2, **characterized in that** the dirt scrapers (19) or seals deflect dirt from the outside and allow dirt to pass from the inside to the outside.

4. Self-boosting friction brake according to Claim 1, **characterized in that** the friction brake (1) is a disc brake.

5. Self-boosting friction brake according to Claim 1, **characterized in that** the ramps (10) are formed in the manner of ribs.

## Revendications

1. Frein à friction autorenforçateur, comprenant une garniture de frein à friction (7), un dispositif d'actionnement, avec lequel la garniture de frein à friction (7) peut être appuyée pour le freinage contre un corps de frein (5) rotatif et à freiner, et un dispositif d'autorenforcement, qui transforme une force de friction exercée lors du freinage par le corps de frein (5) rotatif sur la garniture de frein à friction (7) appuyée contre ce corps en une force d'appui, qui appuie la garniture de frein à friction (7) en supplément d'une force d'appui occasionnée par le dispositif d'actionnement contre le corps de frein (5), le dispositif d'autorenforcement présentant un mécanisme de rampe avec des corps de roulement (12) roulant sur des rampes (10), mécanisme par lequel la garniture de frein à friction (7) s'appuie lors du freinage et qui guide de façon mobile la garniture de frein à friction (7) avec une pente et une direction périphérique vers le corps de frein (5), **caractérisé en ce que** les corps de roulement (12) présentent des recouvrements antipoussière (18) qui recouvrent les corps de roulement (12) et présentent une ouverture sur des points de roulement des corps de roulement (12) sur les rampes (10).

2. Frein à friction autorenforçateur selon la revendication 1, **caractérisé en ce que** les revêtements antipoussière (18) présentent des racleurs de poussière (19) ou des joints sur leurs bords entourant les ouvertures.

3. Frein à friction autorenforçateur selon la revendication 2, **caractérisé en ce que** les racleurs de poussière (19) ou les joints dévient de la poussière de l'extérieur et laissent passer de la poussière de l'intérieur vers l'extérieur.

4. Frein à friction autorenforçateur selon la revendication 1, **caractérisé en ce que** le frein à friction (1) est un frein à disques.

5. Frein de friction autorenforçateur selon la revendication 1, **caractérisé en ce que** les rampes (10) sont conçues à la façon de nervures.
